# EUROPEAN PATENT APPLICATION

(11) **EP 2 523 301 A1**
(43) Date of publication of application: **14.11.2012**
(21) Application number: 11731871.7
(22) Date of filing: 07.01.2011
(51) Int. Cl.: H02J 7/00, H01M 10/44, H01M 10/46, H02J 7/34

(54) **RAPID CHARGER**

(30) Priority: 26.02.2010 JP 2010042008; 08.01.2010 JP 2010003382
(71) Applicant: JFE Engineering Corporation, Chiyoda-ku Tokyo 100-0004 (JP)
(72) Inventor: ISHIKAWA, Hirofumi, Yokohama-shi Kanagawa 230-8611 (JP); TAMURA, Atsushi, Yokohama-shi Kanagawa 230-8611 (JP); SHIMAMURA, Takahiro, Yokohama-shi Kanagawa 230-8611 (JP); IMAIZUMI, Masato, Yokohama-shi Kanagawa 230-8611 (JP); IMAI, Takashi, Kyoto-shi Kyoto 604-0857 (JP)
(74) Representative: HOFFMANN EITLE
(86) International application number: PCT/JP2011/050601
(87) International publication number: WO 2011/083873

(57) **Abstract**

Provided is a rapid charger capable of reducing average power consumption and enabling a power supply contract with a power company to be decreased in its scale. During the charging of a storage battery 3 for equipment, a controller C1 controls a DC power supply unit 2 such that the DC power supply unit generates a DC power necessary for charging the storage battery 3 for equipment from an AC power of a commercial power supply 20 and allows the DC power to be supplied from the DC power supply unit 2 to the storage battery 3 for equipment; and when a storage battery 21 for driving power as a load is connected, the controller C1 allows the DC power supply unit 2 and the storage battery 3 for equipment to form a series circuit, controls the DC power supply unit 2 such that the DC power supply unit generates a predetermined DC power from the AC power of the commercial power supply 20, adds the predetermined DC power to the DC power of the storage battery 3 for equipment to generate a DC power necessary for charging the storage battery 21 for driving power, and allows the generated DC power to be supplied to the storage battery 21 for driving power.

## Description

### TECHNICAL FIELD

The present invention relates to a rapid charger for charging a storage battery for driving power mounted on, for example, an electric vehicle.

### BACKGROUND ART

Recently, as measures for depletion of petroleum resources and global warming, electric vehicles using electric energy as a driving source have been provided in the market. Rapid chargers capable of performing charging within a time equivalent to the refueling time of general vehicles have been required for the electric vehicles.
Conventionally, as an example of the rapid charger, there is a charging device equipped with a large-capacitance storage battery for equipment. In the charging device, the storage battery is charged for a long time with a low current during the charging stop period of an electric vehicle, and in the case where a storage battery of the electric vehicle is to be charged, large current is discharged from the storage battery for equipment (for example, refer to Patent Document 1).

### Citation List

### Patent Document

Patent Document 1: JP 5-207668 A (Pages 4 and 5, Fig. 1)

### DISCLOSURE OF THE INVENTION

### PROBLEMS TO BE SOLVED BY THE INVENTION

In the specification of a rapid charger for a storage battery for driving power of an electric vehicle which has been announced, a rapid charger is considered to be of a DC 400 V and Current 100 A class. Accordingly, a rapid charger is considered to have a circuit efficiency of 90% in power supplied from a commercial power supply line and to have an input power of 44 kW with respect to the output power of 40 kW. There is a problem in that a large-scale contract with a power company is made for acquiring the power supply satisfying the aforementioned specification.

The present invention has been made in view of the above circumstances, and an obj ect thereof is to provide a rapid charger capable of decreasing an average consumption power of the rapid charger to reduce a scale of the contract with a power company which supplies power, increasing an efficiency to reduce power loss, and decreasing a cost to implement wide-spreading thereof.

### MEANS TO SOLVE THE PROBLEMS

According to an aspect of the present invention, there is provided a rapid charger including: a storage battery for equipment, a DC power supply unit which converts an AC power of an AC power supply into a DC power; and a controller which controls the DC power supply unit so as to generate a DC power necessary for charging the storage battery for equipment from the AC power of the AC power supply and allows the DC power to be supplied from the DC power supply unit to the storage battery for equipment during the charging of the storage battery for equipment, wherein, when a storage battery for driving power as a load is connected, the controller allows the DC power supply unit and the storage battery for equipment to form a series circuit, controls the DC power supply unit so as to generate a predetermined DC power from the AC power of the AC power supply, adds the predetermined DC power to the DC power of the storage battery for equipment or adds the DC power of the storage battery for equipment to the predetermined DC power to generate a DC power necessary for charging the storage battery for driving power, and allows the DC power to be supplied to the storage battery for driving power.

### EFFECTS OF THE INVENTION

In the present invention, during the charging of a storage battery for equipment, a DC power supply unit is controlled so as to generate a DC power necessary for charging the storage battery for equipment from an AC power of an AC power supply, and the DC power is supplied from the DC power supply unit to the storage battery for equipment. In addition, when a storage battery for driving power as a load is connected, the DC power supply unit and the storage battery for equipment are allowed to form a series circuit; the DC power supply unit is controlled so as to generate a predetermined DC power from the AC power of the AC power supply; the predetermined DC power is added to the DC power of the storage battery for equipment or the DC power of the storage battery for equipment is added to the predetermined DC power to generate a DC power necessary for charging the storage battery for driving power; and the DC power is supplied to the storage battery for driving power. Accordingly, the output amount of the DC power supply unit can be reduced by the output amount of the storage battery for equipment, so that the circuit size of the DC power supply unit can be reduced, and thus, the production cost of the rapid charger can be suppressed to be small.

In addition, a loss of the power which is charged from the storage battery for equipment of the rapid charger to the storage battery for driving power is very reduced, and with respect to a loss according to the operation of the rapid charger, a power load of the DC power supply unit is small, and a loss of power during the charging of the storage battery for driving power is reduced. As a result, the total power efficiency of the rapid charger is improved.

In addition, since the storage battery for equipment is charged to store the DC power during the charging stop period of the storage battery for driving power, the DC power consumed by the rapid charger during the charging of the storage battery for driving power is decreased by the output amount of the storage battery for equipment, so that the peak of the consumption power can be suppressed to be low; the contract with a power company is made to be a small-scale contract, so that expenses can be reduced; and a change in a power system line can be maintained small, so that, even in the case where a rapid charger of an electric vehicle is connected to a plurality of power systems as AC power supplies in the near future, a factor of unstabilizing the power systems can be reduced.

### BRIEF DESCRIPTION OF THE DRAWINGS

FIG. 1 is a block diagram illustrating a schematic configuration of a rapid charger according to a first embodiment of the invention. FIG. 1(a) illustrates a power storage period, and FIG. 1(b) illustrates a charging operation period.
FIG. 2 is a block diagram illustrating a schematic configuration of a rapid charger according to a second embodiment of the invention. FIG. 2 (a) illustrates a power storage period, and FIG. 2(b) illustrates a charging operation period.
FIG. 3 is a block diagram illustrating a schematic configuration of a rapid charger according to a third embodiment of the invention.
FIG. 4 is a block diagram illustrating a schematic configuration of a rapid charger according to a fourth embodiment of the invention.
FIG. 5 is a block diagram illustrating a schematic configuration of a rapid charger according to a fifth embodiment of the invention.

### DESCRIPTION OF THE EMBODIMENTS

### First Embodiment

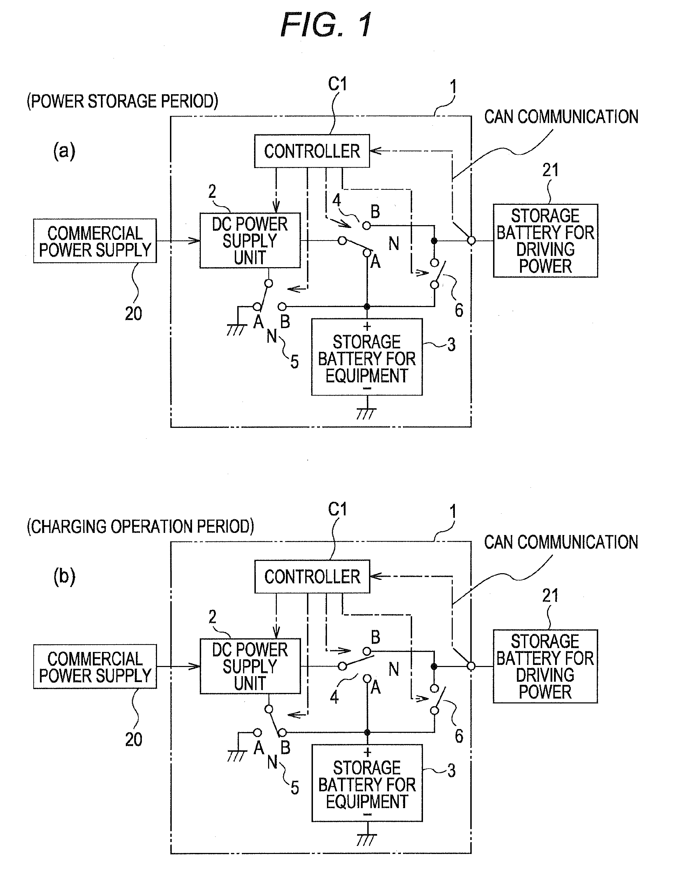

FIG. 1 is a block diagram illustrating a schematic configuration of a rapid charger according to a first embodiment of the invention.
As illustrated in the figure, a rapid charger 1 is configured to include: a DC power supply unit 2 which is connected to a commercial power supply 20 of, for example, AC 200 V; a storage battery 3 for equipment (secondary battery) which can store a DC power amount of, for example, 30 kWh; a first change-over switch 4 which is switched to a connection point A to store power in the storage battery 3 for equipment and is switched to a connection point B to charge a storage battery 21 for driving power; a second change-over switch 5 which is switched to the connection point B to supply a DC power of the storage battery 3 for equipment to the storage battery 21 for driving power and is switched to the connection point A to store the DC power in the storage battery 3 for equipment; a normally-opened third change-over switch 6 of which the one terminal is connected to a connection point B side of the first change-over switch 4 and of which the other terminal is connected to a positive electrode side of the storage battery 3 for equipment; and a controller C1 which controls the DC power supply unit 2 and the first and second change-over switches 4 and 5 during a period of charging the storage battery 3 for equipment or during a period of supplying power to the storage battery 21 for driving power to close the third change-over switch 6 when power receiving is blocked due to power stoppage or the like of the commercial power supply 20.

The storage battery 21 for driving power is configured with, for example, a lithium-ion battery and is used as a power supply for a driving source of an electric vehicle. A storage battery requiring a capacity of, for example, a charge voltage of 400 V and a current of 100 A is assumed to be used as the storage battery 21 for driving power. In addition, switches satisfying DC voltage 400 V and current 100 A are used for the first and second change-over switches 4 and 5.

The aforementioned DC power supply unit 2 has a capacity of the output power of, for example, 10 kW. During the charging of the storage battery 3 for equipment, the DC power supply unit 2 converts AC power of the commercial power supply 20 into DC power and generates, for example, DC voltage 300 V and current 33 A (DC power) necessary for the charging of the storage battery 3 for equipment from the output thereof to charge the storage battery 3 for equipment. In addition, during the charging of the storage battery 21 for driving power, the DC power supply unit 2 is configured to convert the AC power into a DC power and to generate, for example, DC voltage 100 V and current 100 A (predetermined DC power of 10 kW) from the output thereof.

When it is determined by a method such as reception of CAN communication from an electronic control unit mounted on, for example, an electric vehicle that the storage battery 21 for driving power is connected, the aforementioned controller C1 allows the storage battery 3 for equipment and the DC power supply unit 2 to be connected to each other in series to perform the charging of the storage battery 21 for driving power. In addition, when it is determined by non-reception of CAN communication, or the like that the storage battery for driving power is not connected, the controller C1 allows the storage battery 21 for driving power to be in a charging stopped state and allows the DC power supply unit 2 and the storage battery 3 for equipment to be connected to each other to perform the charging of the storage battery 3 for equipment. In this case, the power load of the DC power supply unit 2 can be reduced in comparison with the case where the storage battery 3 for equipment is absent.

In addition, in the case where the storage battery 21 for driving power is connected when the remaining amount of the storage battery 3 for equipment is almost empty, the controller C1 performs the charging of the storage battery 21 for driving power directly from the DC power supply unit 2 without using the storage battery 3 for equipment. In this case, although the charging speed is slower than that of the aforementioned case, the charging operation can be continuously performed.

In addition, in the case where the power is not received from the commercial power supply 20 due to power stoppage or the like, the controller C1 disconnects the DC power supply unit 2 to extract the DC power from only the storage battery 3 for equipment. In this case, since the voltage varies with the charged state of the storage battery 3 for equipment, constant voltage may not be extracted, but power can be supplied as an urgent use for emergency illumination at a time of disaster.

Next, operations of the rapid charger according to the first embodiment will be described with reference to FIG. 1.
In the case where it is determined based on non-reception of CAN communication, or the like that the storage battery for driving power as a load is not connected to the rapid charger 1, the controller C1 allows the first change-over switch 4 to be switched to the connection point A to connect the DC power supply unit 2 and the storage battery 3 for equipment and allows the second change-over switch 5 to be switched to the connection point A to connect the DC power supply unit 2 to ground, as illustrated in FIG. 1(a). Next, the controller C1 controls the DC power supply unit 2 so that the DC power is stored in the storage battery 3 for equipment.

At this time, the DC power supply unit 2 converts the AC power of the commercial power supply 20 into a DC power so that the storage battery 3 for equipment is charged until the DC power amount of, for example, 30 kWh is stored to be in the fully-charged state, generates, for example, a DC power of voltage 300 V and current 33 A from the output thereof, and supplies the generated DC power to the storage battery 3 for equipment through the first change-over switch 4. In addition, with respect to the control of charging the storage battery 3 for equipment, a method of charging according to the charged power amount of the storage battery 3 for equipment and characteristics of the storage battery such as a constant-voltage constant-current method is used, and the control of setting values is performed by the controller C1.

When it is determined by the aforementioned method such as reception of CAN communication that the power storing of the storage battery 3 for equipment is ended, the controller C1 allows the first change-over switch 4 to be switched to the connection point N (neutral) to be in OFF state, so that it is in the stand-by state until it is determined by the aforementioned reception of CAN communication or the like that the storage battery for driving power is connected.

When it is determined by a method such as reception of CAN communication that the storage battery 21 for driving power is connected, the controller C1 allows the first change-over switch 4 to be switched to the connection point B to connect the DC power supply unit 2 and the storage battery 21 for driving power of the electric vehicle and allows the second change-over switch 5 to be switched to the connection point B to connect the storage battery 3 for equipment and the DC power supply unit 2, as illustrated in FIG. 1(b). Next, the controller C1 controls the DC power supply unit 2 so that the storage battery 21 for driving power is charged from the rapid charger 1.

At this time, the DC power supply unit 2 acquires the DC power of 30 kW (voltage 300 V and current 100 A) from the storage battery 3 for equipment, generates a shortage DC power of 10 kW (voltage 100 V and current 100 A) from the AC power of the commercial power supply 20 to add the DC power of 10 kW to the aforementioned power of 30 kW, and supplies the DC power of 40 kW to the storage battery 21 for driving power. When the storage battery 21 for driving power is charged, since the DC power supply unit 2 and the storage battery 3 for equipment are connected to each other in series, as illustrated in FIG. 1(b), the voltages are added. In the aforementioned example, the voltage after the addition is 400 V. In addition, the power load (necessary output capacity) of the DC power supply unit 2 is 1/4 of 40 kW of the case where the storage battery 3 for equipment is absent.
In addition, in the aforementioned example, although 40 kW is used as an example of the charging power of the storage battery 21 for driving power, the charging may be performed at a voltage and a current according to requirements through CAN communication or the like from the storage battery 21 for driving power of the electric vehicle or the like.

In addition, in the case where it is determined by the aforementioned method such as reception of CAN communication that the storage battery 21 for driving power is connected when the remaining amount of the storage battery 3 for equipment is almost empty, the controller C1 allows the first change-over switch 4 to be switched to the connection point B and allows the second change-over switch 5 to be switched to the connection point A to connect the DC power supply unit 2. Next, the controller C1 controls the DC power supply unit 2 so that the DC power of, for example, voltage 400 V and current 25 A is generated from the AC power of the commercial power supply 20. The actually-generated voltage or current is generated so that the capacity (10 kW) of the DC power supply unit 2 is generated as a maximum value according to the values which the storage battery 21 for driving power requires through CAN communication or the like. In this case, in comparison with the case where the storage battery 3 for equipment and the DC power supply unit 2 are connected to each other in series to charge the storage battery 21 for driving power, the generated power is reduced, so that the charging speed is decreased. However, the charging of the storage battery 21 for driving power can be continuously performed without stopping the charging operation.

Next, in the case where the AC voltage (200 V) of the commercial power supply 20 is equal to or lower than a predetermined value due to, for example, power stoppage or the like, operations will be described.
As described above, when the AC voltage is equal to or lower than a predetermined value, the controller C1 allows the normally-opened third change-over switch 6 to be closed, allows the first change-over switch 4 to be switched to the connection point N, and allows the second change-over switch 5 to be switched to the connection point A. At this time, the DC power is supplied from the storage battery 3 for equipment to the load side without operating the DC power supply unit 2. In this case, since the output voltage is determined depending on the amount of charges stored in the storage battery 3 for equipment at this time, the power can be supplied to only the load of which the change in the output voltage is allowable in some degree, so that the storage battery 3 for equipment can be used for an emergency illumination at a time of occurrence of a disaster. With respect to the power supply for operating the controller C1 in the case where the commercial power supply 20 is in a power failure state due to an accident or the like, a battery built in the controller C1 or a power from the storage battery 3 for equipment is used.

In this manner, in the first embodiment, during the charging stop period of the storage battery 21 for driving power, for example, a DC power of voltage 300 V and current 33 A is output from the DC power supply unit 2, and the DC power is stored in the storage battery 3 for equipment. In addition, when the storage battery 21 for driving power is connected, the DC power supply unit 2 acquires the DC power of 30 kW from the storage battery 3 for equipment, generates a shortage DC power of 10 kW from the AC power of the commercial power supply 20 to add the DC power of 10 kW to the DC power of 30 kW, and supplies the DC power of 40 kW to the storage battery 21 for driving power.

Accordingly, the output amount of the storage battery 3 for equipment becomes smaller than the output amount of the DC power supply unit 2, so that the circuit size of the DC power supply unit 2 can be reduced, and thus, the production cost of the rapid charger 1 can be suppressed to be small. For example, similarly to the aforementioned numeral example, in the case where the power of the storage battery 3 for equipment is set to be 3/4 of the necessary power, the output power of the DC power supply unit 2 becomes 1/4 of the necessary power, and the consumption power also becomes about 1/4. Accordingly, the circuit size of the DC power supply unit 2 also becomes about 1/4, so that the production cost of the rapid charger 1 can also be decreased.

In addition, in the case where the DC power supply unit 2 is in the stand-by state, the stand-by power is decreased by a decreased capacity of the DC power supply unit 2, and thus, the power loss during the charging is reduced by the corresponding amount. As a result, a total loss of the rapid charger 1 can be reduced.

In addition, since the storage battery 3 for equipment is charged to store the DC power during the charging stop period of the storage battery 21 for driving power, the power consumed by the rapid charger 1 during the charging of the storage battery 21 for driving power is decreased by the output amount of the storage battery 3 for equipment, so that the peak of the power consumption can be suppressed to be low. For example, the peak of the power becomes about 1/4 as described above, and a small scale of the contract is made with a power company, so that expenses can be reduced; and a factor of unstabilizing the power systems can be reduced.

In addition, in the case where the storage battery 21 for driving power as a load is connected when the remaining amount of the storage battery 3 for equipment is almost empty, the DC power supply unit 2 is allowed to output a DC power of 10 kW. Therefore, although the charging speed is slow, the charging of the storage battery 21 for driving power can be performed by only the DC power from the DC power supply unit 2. In addition, in the case where the AC voltage of the commercial power supply 20 is equal to or lower than a predetermined value, the third change-over switch 6 is closed, so that the DC power is output from the storage battery 3 for equipment. Therefore, at the time of power stoppage of the commercial power supply, power can be supplied for emergency illumination at a time of disaster by using the rapid charger.

### <Second Embodiment>

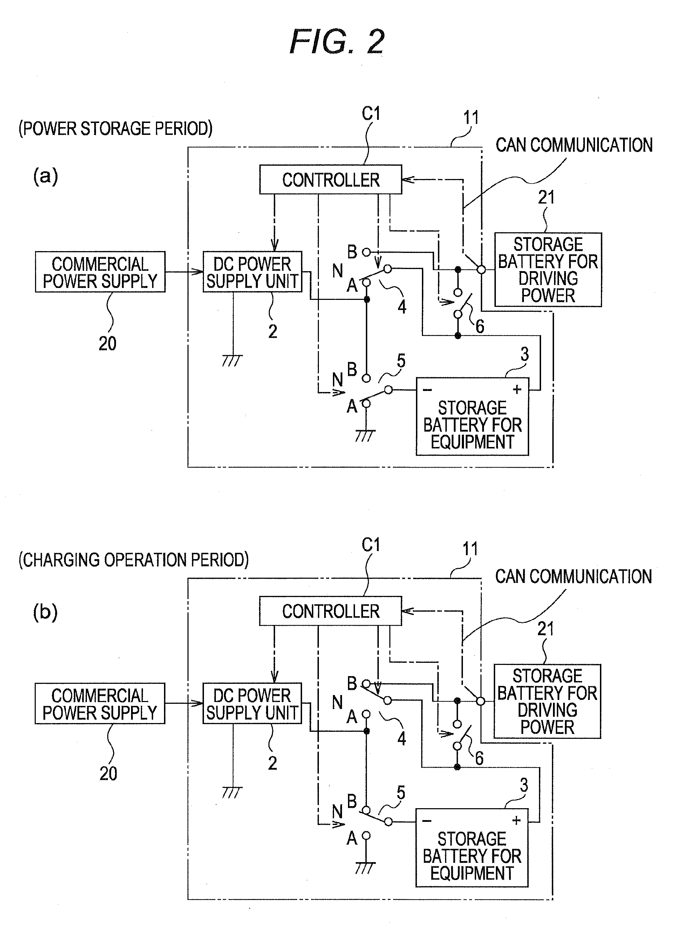

FIG. 2 is a block diagram illustrating a schematic configuration of a rapid charger according to a second embodiment of the invention. In addition, the same portions as those of the first embodiment are denoted by the same reference numerals.
A rapid charger 11 according to the second embodiment is configured to include: a DC power supply unit 2 and a storage battery 3 for equipment which are the same as those of the first embodiment; first and second change-over switches 4 and 5; a normally-opened third change-over switch 6; and a controller C1. The first change-over switch 4 is connected to a positive electrode of the storage battery 3 for equipment. A connection point A is connected to a connection point B of the second change-over switch 5 and an output terminal of the DC power supply unit 2. The connection point B is connected to an output terminal of the rapid charger 11. The second change-over switch 5 is connected to a negative electrode of the storage battery 3 for equipment. The connection point A is connected to ground. The connection point B is connected to the connection point A of the first change-over switch 4 and an output terminal of the DC power supply unit 2.

Accordingly, during the charging stop period of the storage battery 21 for driving power of the electric vehicle or the like, a circuit is configured so that the storage battery 3 for equipment is inserted between the DC power supply unit 2 and ground; and during the charging period of the storage battery 21 for driving power of the electric vehicle, a circuit is configured so that the storage battery 3 for equipment is inserted between the DC power supply unit 2 and the storage battery 21 for driving power. Namely, the DC power supply unit 2 and the storage battery 3 for equipment are connected to each other in series. Similarly to the first embodiment, the one terminal of the aforementioned third change-over switch 6 is connected to the connection point B of the first change-over switch 4, and the other terminal thereof is connected to the positive electrode side of the storage battery 3 for equipment.

Similarly to the first embodiment, during the charging of the storage battery 3 for equipment, as illustrated in FIG. 2(a), the aforementioned controller C1 allows the first and second change-over switches 4 and 5 to be connected and controls the DC power supply unit 2 having a capacity of, for example, a charge power of 10 kW to supply a DC power of voltage 300 V and current 33 A to the storage battery 3 for equipment having a capacity of, for example, 30 kWh. In addition, during the charging of the storage battery 21 for driving power, as illustrated in FIG. 2(b), the controller C1 allows the first and second change-over switches 4 and 5 to be switched to connect the DC power supply unit 2 and the storage battery 3 for equipment in series, so that the power of 30 kW is output from the DC power stored in the storage battery 3 for equipment, and the DC power supply unit 2 is controlled. At this time, the DC power supply unit 2 generates a shortage DC power of 10 kW (DC voltage 100 V and current 100 A) from the AC power of the commercial power supply 20 to add the DC power of 30 kW to the DC power of 10 kW and supplies the DC power of 40 kW to the storage battery 21 for driving power.

Even in this case, the power load of the DC power supply unit 2 becomes 1/4 of the required power (40 kW) of the DC power supply unit 2 during the charging of the storage battery 3 for equipment, and the power load thereof becomes 1/4 during the charging of the storage battery 21 for driving power, so that the DC power supply unit 2 is decreased as 1/4. Similarly to the first embodiment, the switches satisfying the DC power of voltage 400 V and current 100 A are used for the first and second change-over switches 4 and 5.

Since the operations of the rapid charger according to the second embodiment are the same as those of the first embodiment, the description thereof is not repeated.
Note that, when the AC voltage is equal to or lower than a predetermined value, the controller C1 allows the third change-over switch 6 to be closed, allows the first change-over switch 4 to be switched to the connection point A, and allows the second change-over switch 5 to be switched to the connection point N. In this case, the charging of the storage battery 21 for driving power from the DC power supply unit 2 is performed in the state in which the storage battery 3 for equipment is disconnected.

In this manner, in the second embodiment, during the charging stop period of the storage battery 21 for driving power, a DC power of voltage 300 V and current 33 A is output from the DC power supply unit 2, and the DC power is stored in the storage battery 3 for equipment. In addition, when the storage battery 21 for driving power is connected, the DC power of 30 kW from the storage battery 3 for equipment is added to a shortage DC power of 10 kW generated by the DC power supply unit 2, and the DC power of 40 kW is supplied to the storage battery 21 for driving power.

Accordingly, similarly to the first embodiment, the output amount of the storage battery 3 for equipment becomes smaller than the output amount of the DC power supply unit 2, so that the circuit size of the DC power supply unit 2 can be reduced, and thus, the production cost of the rapid charger 11 can be suppressed to be small. For example, similarly to the aforementioned numeral example, in the case where the power of the storage battery 3 for equipment is set to be 3/4 of the necessary power, the output power of the DC power supply unit 2 becomes 1/4 of the necessary power, and the consumption power also becomes about 1/4. Accordingly, the circuit size of the DC power supply unit 2 also becomes about 1/4, so that the production cost of the rapid charger 11 can also be decreased.

In addition, in the case where the DC power supply unit 2 is in the stand-by state, the stand-by power is decreased by a decreased capacity of the DC power supply unit 2, and thus, the power loss during the charging is reduced by the corresponding amount. As a result, a total loss of the rapid charger 11 can be reduced.

In addition, since the storage battery 3 for equipment is charged to store the DC power during the charging stop period of the storage battery 21 for driving power, the power consumed by the rapid charger 11 during the charging of the storage battery 21 for driving power is decreased by the output amount of the storage battery 3 for equipment, so that the peak of the power consumption can be suppressed to be low. For example, the peak of the power becomes about 1/4 as described above, and a small scale of the contract is made with a power company, so that expenses can be reduced.

In addition, in the case where the storage battery 21 for driving power as a load is connected when the remaining amount of the storage battery 3 for equipment is almost empty, the DC power supply unit 2 is allowed to output a DC power of 10 kW. Therefore, although the charging speed is slow, the charging of the storage battery 21 for driving power can be performed by only the DC power from the DC power supply unit 2.

In addition, in the case where the AC voltage of the commercial power supply 20 is equal to or lower than a predetermined value due to power stoppage or the like, the third change-over switch 6 is closed, so that the DC power is output from the storage battery 3 for equipment. Therefore, power can be supplied for emergency illumination by using the rapid charger 11 as an emergency power supply.

In addition, the second embodiment may be configured so that the low voltage terminal among the output terminals of the DC power supply unit 2 can always be grounded. Therefore, in the second embodiment, even in the case where there is a limitation in dielectric strength in terms of a structure of the DC power supply unit 2, it is possible to achieve the effect equivalent to that of the rapid charger 1 according to the first embodiment.

### Third Embodiment

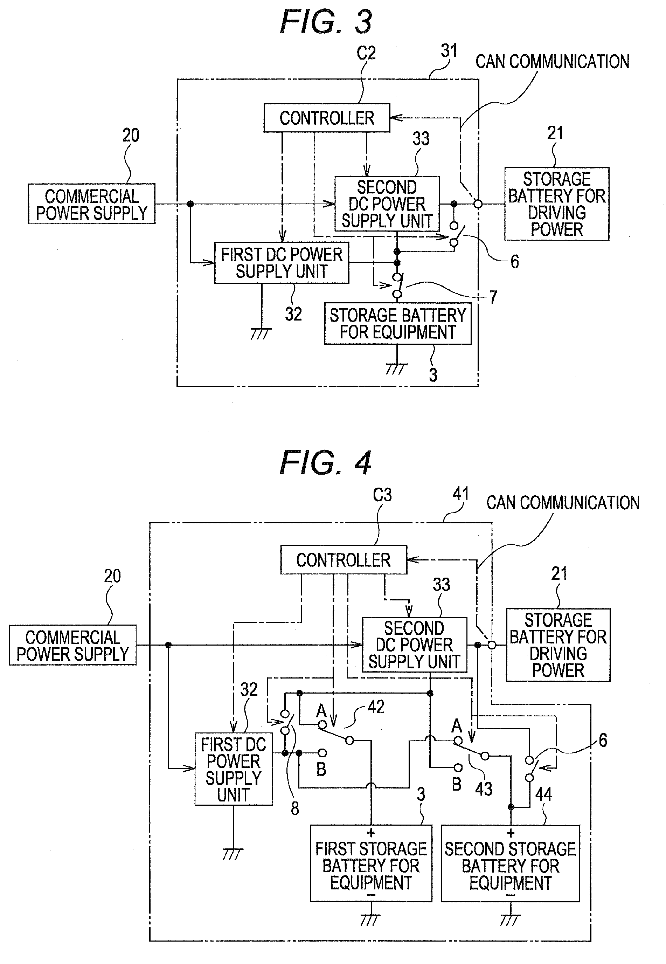

FIG. 3 is a block diagram illustrating a schematic configuration of a rapid charger according to a third embodiment of the invention. In addition, the same portions as those of the first embodiment are denoted by the same reference numerals.
A rapid charger 31 according to the third embodiment is configured to include: first and second DC power supply units 32 and 33 which are connected to a commercial power supply 20; a storage battery 3 for equipment which can store, similarly to the first embodiment, a DC power amount of, for example, 30 kWh; a normally-opened third change-over switch 6 of which the one terminal is connected to an output side of the second DC power supply unit 33 and of which the other terminal is connected to an output side of the first DC power supply unit 32; a normally-closed fourth change-over switch 7 of which the one terminal is connected to the storage battery 3 for equipment and of which the other terminal is connected to the output side of the first DC power supply unit 32; and a controller C2 described later.

The first DC power supply unit 32 has, for example, a capacity of a charge power of 10 kW for charging the storage battery 3 for equipment. During the charging of the storage battery 3 for equipment, the first DC power supply unit 32 converts the AC voltage 200 V of the commercial power supply 20 into a DC voltage to generate, for example, a DC power of voltage 300 V and current 33 A (DC power) necessary for charging the storage battery 3 for equipment from the output and supply the DC power to the storage battery 3 for equipment.

The second DC power supply unit 33 has, for example, a capacity of a charge power of 10 kW for charging the storage battery 21 for driving power mounted on an electric vehicle. During the charging of the storage battery 21 for driving power, the second DC power supply unit 33 acquires a DC power of 30 kW (300 V, 100 A) from the DC power stored in the storage battery 3 for equipment and generates a storage DC power of 10 kW (DC voltage 100 V and current 100 A) from the AC power of commercial power supply 20 to add 30 kW and 10 kW, and supplies the DC power of 40 kW to the storage battery 21 for driving power.

For example, when it is determined by a method such as reception of CAN communication from an electronic control unit mounted on an electric vehicle that the storage battery 21 for driving power is connected, the aforementioned controller C2 controls the second DC power supply unit 33 to acquire the AC power of the commercial power supply 20, to convert the AC power into a DC power, to be connected in series to the DC power of the storage battery 3 for equipment, and to supply the output to the storage battery 21 for driving power. In the case where it is determined by a method such as reception of CAN communication that the charging is ended, the controller C2 stops controlling the second DC power supply unit 33 to end the charging operation. In addition, in the case where the CAN communication described above is not received, the controller C2 controls the first DC power supply unit 32 to acquire the AC power of the commercial power supply 20, to covert the AC power into a DC power, and to charge the storage battery 3 for equipment with the DC power. When the DC power amount (30 kWh) necessary for the storage battery 3 for equipment is stored, the controller C2 stops controlling the first DC power supply unit 32 to end the operation of charging the storage battery 3 for equipment.

In addition, in the case where it is determined by the aforementioned method such as reception of CAN communication that the storage battery 21 for driving power is connected when the remaining amount of the storage battery 3 for equipment is almost empty, the controller C2 controls the fourth change-over switch 7 to be opened so that a DC power is not output from the storage battery 3 for equipment, and subsequently, the controller C2 controls the first and second DC power supply units 32 and 33 to simultaneously perform the operation of charging the storage battery 21 for driving power. The determination whether or not the remaining amount of the storage battery 3 for equipment is almost empty is performed by the controller C2 based on detection values of a current detection means and a voltage detection means connected to the positive electrode side of the storage battery 3 for equipment as described above.

In addition, when the AC voltage of the commercial power supply 20 is equal to or lower than a predetermined value, the controller C2 allows the third change-over switch 6 to be closed so that the storage battery 3 for equipment is used as an emergency power supply. The determination whether or not the AC voltage is equal to or lower than a predetermined value is performed by the controller C2 based on a signal from an under-voltage relay connected to an input side of the commercial power supply 20 as described.

The power load of the first DC power supply unit 32 described above becomes 1/4 of the DC power (40kW) required for the storage battery 21 for driving power, and the power load of the second DC power supply unit 33 becomes 1/4, similarly to the first DC power supply unit 32, so that both of the first and second DC power supply units 31 and 32 are reduced to be 1/4 in circuit size.

Next, operations of the rapid charger according to the third embodiment will be described with reference to FIG. 3. First, the state that storage battery 21 for driving power is not connected to the output side of the rapid charger 31 will be described.
When the aforementioned CAN communication is not received, the controller C2 determines that the storage battery 21 for driving power of the electric vehicle is not connected to the output side of the rapid charger 31, and the controller C2 controls the first DC power supply unit 32 to perform the operation of charging the storage battery 3 for equipment and controls the second DC power supply unit 33 not to perform the operation of charging the storage battery 21 for driving power. In addition, in the case where the storage battery 3 for equipment is fully-charged (30 kWh), the controller C2 stands by without performing the later-described control operation. In the case where the storage battery 3 for equipment is not fully-charged, the controller C2 controls the first DC power supply unit 32 so that the DC power amount of 30 kWh is stored in the storage battery 3 for equipment. At this time, the first DC power supply unit 32 acquires the AC power of the commercial power supply 20 to convert the AC power into a DC power, generates a DC power of voltage 300 V and current 33 A from the output, and supplies the DC power to the storage battery 3 for equipment.

During the stand-by or during the charging of the storage battery 3 for equipment, in the case where it is determined by a method such as reception of CAN communication that the storage battery 21 for driving power of the electric vehicle is connected, the controller C2 controls the second DC power supply unit 33 to perform the operation of charging the storage battery 21 for driving power. At this time, in the case where the storage battery 3 for equipment is being charged, the controller C2 stops the charging operation of the first DC power supply unit 32 and stops acquiring the AC power from the commercial power supply 20, so that the charging of the storage battery 3 for equipment is stopped. On the other hand, under the control of the controller C2, the second DC power supply unit 33 acquires the DC power of 30 kW(DC voltage 300 V and current 100 A) from the DC power stored in the storage battery 3 for equipment, generates a shortage DC power of 10 kW (DC voltage 100 V and current 100 A) from the AC power of the commercial power supply 20 to add the shortage DC power to 30 kW, and supplies the DC power of 40 kW(DC voltage 400 V and current 100 A) to the storage battery 21 for driving power. Even in this case, as described above, the aforementioned voltage values and current values are exemplary, and the second DC power supply unit 33 is controlled by the controller C3 so as to perform the charging according to the characteristics satisfying the requirements from the storage battery for driving power.

In addition, in the case where the remaining DC power amount of the storage battery 3 for equipment is decreased and it is sensed that the charging of the storage battery 21 for driving power cannot be sufficiently performed by only the storage battery 3 for equipment, when it is determined by the aforementioned method such as reception of CAN communication that the storage battery 21 for driving power of the electric vehicle is connected, the controller C2 allows the first and second DC power supply units 32 and 33 to be simultaneously operated. Next, the controller C2 allows the DC power of the storage battery 3 for equipment to be combined to the DC power of the first DC power supply unit 32 and to be connected in series to the second DC power supply unit 33, and the controller C2 performs the output control of the DC power so that a shortage amount of the remaining amount of the storage battery 3 for equipment is supplemented by the first and second DC power supply units 32 and 32, and the charging of the storage battery 21 for driving power is continuously performed.

In addition, in the case where it is determined by the aforementioned method such as reception of CAN communication that the storage battery 21 for driving power of the electric vehicle is connected when the remaining amount of the storage battery 3 for equipment is almost empty, the controller C2 controls the fourth change-over switch 7 to be opened, and subsequently, allows both of the first and second DC power supply units 32 and 33 to simultaneously perform the operation of charging the storage battery 21 for driving power. At this time, the controller C2 controls the first DC power supply unit 32 to generate, for example, a DC power of voltage 300 V and current 33 A and controls the second DC power supply unit 33 to generate, for example, a DC power of voltage 100 V and current 33 A. In addition, the normally-closed fourth change-over switch 7 is opened, so that the DC power from the first DC power supply unit 32 is not introduced into the storage battery 7 for equipment. As a result, the charging of the storage battery 21 for driving power is performed with the DC power of voltage 400 V and current 33 A, and thus, in comparison with the case where the storage battery 3 for equipment has the remaining amount, the charging speed is slow, but the charging can be continuously performed.

In the case where the charging of the storage battery 21 for driving power is ended, the controller C2 stops the charging operations of the DC power supply units 32 and 33 and allows the fourth change-over switch 7 to be closed again. In addition, in the case where the AC voltage of the commercial power supply 20 is equal to or lower than a predetermined value during the charging of the storage battery 21 for driving power, the controller C2 allows the normally-opened third change-over switch 6 to be closed, so that the storage battery 3 for equipment is used as an emergency power supply as described above.

In this manner, in the third embodiment, during the charging stop period of the storage battery 21 for driving power, a DC power of voltage 300 V and current 33 A is output from the first DC power supply unit 32, and the DC power is stored in the storage battery 3 for equipment. In addition, when the storage battery 21 for driving power is connected, the second DC power supply unit 33 acquires the DC power of 30 kW from the storage battery 3 for equipment, generates a shortage DC power of 10 kW from the AC power of the commercial power supply 20 to add the DC power of 10 kW to the DC power of 30 kW, and supplies the DC power of 40 kW to the storage battery 21 for driving power.

Accordingly, the output amount of the storage battery 3 for equipment becomes smaller than the output amount of the second DC power supply unit 33, so that a circuit size of the second DC power supply unit 33 can be reduced. For example, in the case where the power of the storage battery 3 for equipment is set to 3/4 of the necessary power, the output power of the second DC power supply unit 33 becomes 1/4 of the necessary power, so that the power consumption also becomes about 1/4. Accordingly, a circuit size of the second DC power supply unit 33 also becomes about 1/4.

In addition, in the case where the second DC power supply unit 33 is in the stand-by state, the stand-by power is decreased by a decreased capacity of the second DC power supply unit 33, and thus, the power loss during the charging is reduced by the corresponding amount. As a result, a total power efficiency of the rapid charger 31 is improved.

In addition, since the storage battery 3 for equipment is charged by the first DC power supply unit 32 to store the DC power during the charging stop period of the storage battery 21 for driving power, the power consumed by the rapid charger 31 during the charging of the storage battery 21 for driving power is decreased by the output amount of the storage battery 3 for equipment, so that the peak of the power consumption can be suppressed to be low. For example, the peak of the power becomes about 1/4 as described above, and a small scale of the contract is made with a power company, so that expenses can be reduced; and a change in the commercial power supply can be suppressed.

In addition, in the configuration of the third embodiment, during suspension of the charging of the storage battery 21 for driving power, the first DC power supply unit 32 charges the storage battery 3 for equipment, and when the storage battery 21 for driving power is connected, the second DC power supply unit 33 adds the DC power of 30 kW output from the storage battery 3 for equipment to the storage DC power of 10 kW. Therefore, the first and second change-over switches 4 and 5 required for switching the circuit configuration necessary for the rapid chargers 1 and 11 according to the first and second embodiments are unnecessary, so that the circuit configuration of the rapid charger 31 can be simplified.

In addition, in the case where the storage battery 21 for driving power as a load is connected when the remaining amount of the storage battery 3 for equipment is almost empty, both of the first and second DC power supply units 32 and 33 are allowed to output a DC power. Therefore, although the charging speed is slow, the charging of the storage battery 21 for driving power can be performed. In addition, in the case where the AC voltage of the commercial power supply 20 is equal to or lower than a predetermined value, the third change-over switch 6 is closed, so that the DC power is output from the storage battery 3 for equipment. Therefore, power can be supplied for emergency illumination or the like by using the storage battery 3 for equipment as an emergency power supply.

In addition to the aforementioned features, the third embodiment has two features as follows.

(1) In the first and second embodiments, the DC power supply unit 2 needs to have two operations, that is, the operation of outputting a DC power of, for example, voltage 300 V and current 33 A and the operation of outputting a DC power of, for example, voltage 100 V and current 100 A. Although the output powers in both sides are the same as 10 kW, in actual cases, it may be difficult to manufacture the DC power supply unit 2 having wide operating ranges of voltage and current in terms of cost. On the other hand, in the third embodiment, in each of the first and second DC power supply units 32 and 33, the ranges of voltage and current are limited, so that it is possible to manufacture the DC power supply units at a low cost.

(2) In the first and second embodiments, if the storage battery 21 for driving power is to be charged in the state where the remaining capacity of the storage battery 3 for equipment is very small, in the aforementioned example, the DC power of voltage 400 V and current 25 A can be generated. On the other hand, in the third embodiment, the two DC power supply units 32 and 33 are simultaneously operated so as to generate the DC power of voltage 400 V and current 33 A, so that there is an advantage in that the charging of the storage battery 21 for driving power can be performed speedily in comparison with the first and second embodiments.

In addition, in the first, second, and third embodiments, although each of the rapid chargers 1, 11, and 31 is provided with one storage battery 3 for equipment, each of the rapid chargers 1, 11, and 31 may be provided with a plurality of the storage batteries 3 for equipment. In this case, one or two or more storage batteries 3 for equipment is connected in parallel to the storage battery 3 for equipment. Accordingly, since a degree of freedom in selection of the charging period of the storage battery 3 for equipment and the charging period of the storage battery 21 for driving power is increased, it is possible to efficiently charge much more electric vehicles.

### Fourth Embodiment

Now, an embodiment in the case where the rapid charger 31 according to the aforementioned third embodiment is provided with a plurality of storage batteries for equipment will be described with reference to FIG. 4.
FIG. 4 is a block diagram illustrating a schematic configuration of a rapid charger according to a fourth embodiment of the invention. In addition, the same portions as those of the third embodiment are denoted by the same reference numerals.
A rapid charger 41 according to the fourth embodiment is configured to include: first and second DC power supply units 32 and 33 which are connected to a commercial power supply 20 of, for example, AC 200 V; first and second storage batteries 3 for equipment and 44 which can store, similarly to the third embodiment, a DC power amount of, for example, 30 kWh; first and second change-over switches 42 and 43; a normally-opened third change-over switch 6; a normally-opened fifth change-over switch 8; and a controller C3. In addition, the control function of the controller C3 will be described in detail when the operation of the rapid charger 41 is described.

Similarly to the third embodiment, each of the first and second DC power supply units 32 and 33 has a capacity of a charging power of 10 kW. The first DC power supply unit 32 is used to charge the first and second storage batteries 3 and 44 for equipment, and the second DC power supply unit 33 is used to charge the storage battery 21 for driving power of the electric vehicle. Similarly to the third embodiment, during the charging of the first storage battery 3 for equipment or the second storage battery 44 for equipment, the first DC power supply unit 32 receives the AC power of the commercial power supply 20 to convert the AC power into a DC power and charges the first storage battery 3 for equipment or the second storage battery 44 for equipment with the DC power. In addition, the second DC power supply unit 33 is connected in series to the DC power stored in the first storage battery 3 for equipment or the second storage battery 44 for equipment to add the voltages, so that the charging of the storage battery 21 for driving power is performed.

The first change-over switch 42 is connected to a positive electrode of the first storage battery 3 for equipment. The connection point A is connected to the second DC power supply unit 33 and the connection point B of the second change-over switch 43. In addition, the connection point B of the first change-over switch 42 is connected to an output terminal of the first DC power supply unit 32. The second change-over switch 43 is connected to a positive electrode of the second storage battery 44 for equipment. The connection point A is connected to the output terminal of the first DC power supply unit 32, and the connection point B is connected to the second DC power supply unit 33. The one terminal of the third change-over switch 6 is connected to an output side of the second DC power supply unit 33, and the other terminal thereof is connected to, for example, a positive electrode side of the second storage battery 44 for equipment. The aforementioned first and second change-over switches 42 and 43 and the third change-over switch 6 are configured so that the circuit connection is switched under the control of the controller C3. The fifth change-over switch 8 is connected between the connection point A and the connection point B of first change-over switch 42 and is normally opened. The fifth change-over switch 8 is configured so that the circuit connection is switched under the control of the controller C3. In addition, although the other terminal of the third change-over switch 6 is connected to the positive electrode side of the second storage battery 44 for equipment, the other terminal of the third change-over switch 6 may be connected to the positive electrode side of the first storage battery 3 for equipment instead of the second storage battery 44 for equipment.

Next, operations of the rapid charger according to the fourth embodiment will be described with reference to FIG. 4. In addition, the case where the DC power amount necessary for charging the storage battery 21 for driving power is stored in the first storage battery 3 for equipment and the DC power amount necessary for charging the storage battery 21 for driving power is not stored in the second storage battery 44 for equipment, will be described as an example.
For example, when CAN communication is not received from an electronic control unit mounted on an electric vehicle, as illustrated in the figure, the controller C3 allows both of the first and second change-over switches 42 and 43 to be connected to the connection point A. Next, the controller C3 allows the first DC power supply unit 32 to convert the AC power of the commercial power supply 20 into a DC power and to supply the DC power to the second storage battery 44 for equipment, so that the charging operation is performed to store a DC power amount of, for example, 30 kWh. At this time, the first DC power supply unit 32 converts the AC power of the commercial power supply 20 into a DC power, generates a DC power of, for example, voltage 300 V and current 33 A from the output, and supplies the DC power to the second storage battery 44 for equipment. When it is sensed that the charging of the second storage battery 44 for equipment is ended, the controller C3 stops the first DC power supply unit 32 from performing the charging operation. Due to the stopping, the connection to the commercial power supply 20 and the connection to the second storage battery 44 for equipment are blocked, and thus, the charging is ended.

On the contrary, even in the case where the DC power amount necessary for charging the storage battery 21 for driving power is not stored in the first storage battery 3 for equipment and the DC power amount necessary for charging the storage battery 21 for driving power is stored in the second storage battery 44 for equipment, the controller C3 allows both of the first and second change-over switches 42 and 43 to be connected to the connection point B, so that the same operation of charging the second storage battery 44 for equipment is performed. In the case where a sufficient amount of charges is not stored in both of the storage battery for equipments 3 and 44, the operation described above is repeated, so that the first and second storage batteries 3 and 44 for equipment are sequentially charged.

Next, as an example, in the case where sufficient DC power amounts are stored in both of the first and second storage batteries 3 and 44 for equipment, when the storage battery 21 for driving power as a load is connected to the rapid charger 41, the operations will be described.
When it is determined by a method such as reception of CAN communication from an electronic control unit of an electric vehicle that the storage battery 21 for driving power is connected, the controller C3 controls the second DC power supply unit 33 such that it acquires the AC power of the commercial power supply 20, to convert the AC power into a DC power, to be connected in series to the DC power of the first storage battery 3 for equipment, and to supply the output (DC power of, for example, 40 kW) to the storage battery 21 for driving power. At this time, under the control, the second DC power supply unit 33 acquires a DC power of 30 kW from the DC power stored in the first storage battery 3 for equipment, generates a storage DC power of 10 kW (DC voltage 100 V and current 100 A) from the AC power of the commercial power supply 20 to add these powers, and supplies the DC power of 40 kW to the storage battery 21 for driving power. On the other hand, when it is sensed by a method such as CAN communication that the charging of the storage battery 21 for driving power is ended, the controller C3 stops the charging operation of the second DC power supply unit 33. Due to this stopping, the connection to the commercial power supply 20 and the connection to the first storage battery 3 for equipment are blocked.

While the charging of the storage battery 21 for driving power is repetitively performed by using the first storage battery 3 for equipment, if it is sensed that the DC power amount stored in the first storage battery 3 for equipment is decreased to be equal to or lower than a predetermined capacity, the controller C3 allows both of the first and second change-over switches 42 and 43 to be switched and connected from the connection point A to the connection point B. Next, the controller C3 controls the first DC power supply unit 32 so that the first DC power supply unit 32 is operated to acquire the AC power from the commercial power supply 20 and to store the DC power amount of 30 kWh in the first storage battery 3 for equipment. At this time, under the control, the first DC power supply unit 32 converts the AC power of the commercial power supply 20 into a DC power, generates a DC power of voltage 300 V and current 33 A from the output, and supplies the DC power to the first storage battery 3 for equipment.

During the charging of the first storage battery 3 for equipment, in the case where it is determined by a method such as reception of CAN communication that the storage battery 21 for driving power is connected to the output side of the rapid charger 41, the controller C3 allows the second DC power supply unit 33 to acquire the AC power from the commercial power supply 20 and to be connected in series to the second storage battery 44 for equipment of which the DC output has a sufficient DC power amount. In addition, the controller C3 controls the second DC power supply unit 33 such that the DC power of 40 kW is output to the storage battery 21 for driving power. At this time, under the control, the second DC power supply unit 33 acquires a DC power of 30 kW from the DC power stored in the second storage battery 44 for equipment, generates a storage DC power of 10 kW (DC voltage 100 V and current 100 A) from the AC power of the commercial power supply 20 to add these powers, and supplies the DC power of 40 kW to the storage battery 21 for driving power. On the other hand, when it is sensed by a method such as reception of CAN communication that the charging of the storage battery 21 for driving power is ended, the controller C3 stops the operation of the second DC power supply unit 33, so that the operation of charging the storage battery 21 for driving power is stopped.

In other words, in the case where the first storage battery 3 for equipment of the first and second storage batteries 3 and 44 for equipment is used for charging the storage battery 21 for driving power, the first and second change-over switches 42 and 43 are switched to the connection point A to be connected. Accordingly, the first storage battery 3 for equipment is connected in series to the second DC power supply unit 33 to be used for charging the storage battery 21 for driving power. In this case, the second storage battery 44 for equipment is charged by the first DC power supply unit 32. On the contrary, in the case where the second storage battery 44 for equipment is used for charging the storage battery 21 for driving power, the first and second change-over switches 42 and 43 are switched from the connection point A to the connection point B to be connected. Accordingly, the second storage battery 44 for equipment and the second DC power supply unit 33 are connected to each other in series to be used for charging the storage battery 21 for driving power, and simultaneously, the first storage battery 3 for equipment is charged by the first DC power supply unit 32.

In this manner, the charging of the storage battery 21 for driving power is performed, and simultaneously, the charging of the storage battery for equipment which is not used can be performed. Therefore, the charging of the storage battery 21 for driving power of the electric vehicle can be continuously performed, so that it is possible to efficiently charge many electric vehicles.

In addition, in the fourth embodiment, when any one of, for example, the first storage battery 3 for equipment and the second storage battery 44 for equipment stores the DC power amount necessary for charging the storage battery 21 for driving power, in the case where it is determined by the aforementioned method such as reception of CAN communication that the storage battery 21 for driving power is connected to the output side of the rapid charger 41, as described above, the controller C3 allows both of the first and second change-over switches 42 and 43 to be connected to the connection point A, so that the charging of the storage battery 21 for driving power connected to the rapid charger 41 from the first storage battery 3 for equipment is performed.

In this state, the power amount stored in the first storage battery 3 for equipment is decreased as the charging of the storage battery 21 for driving power is performed; and if the power amount stored in the first storage battery 3 for equipment is decreased to be equal to or lower than the power necessary for the charging before the charging of the storage battery 21 for driving power is ended, the controller C3 senses this state and allows the first and second change-over switches 42 and 43 to be switched from the connection point A to the connection point B. Accordingly, the charging of the storage battery 21 for driving power can be continuously performed by uninterruptedly using the second storage battery 44 for equipment. Even in the case where the remaining power amount is insufficient during the charging of the storage battery 21 for driving power by using the second storage battery 44 for equipment and the first storage battery 3 for equipment stores a sufficient DC power amount, similarly, the first and second change-over switches 42 and 43 can be switched from the connection point B to the connection point A.
In this manner, in the fourth embodiment, operation stoppage of the device due to a shortage of the remaining amount of the storage battery for equipment can be avoided, and thus, it is possible to more efficiently operate the device.

Next, the operation of charging the storage battery 21 for driving power by simultaneously using the first and second DC power supply units 32 and 33 will be described in the case where it is determined by the aforementioned method such as reception of CAN communication that the storage battery 21 for driving power is connected when the remaining DC power amount of the first and second storage batteries 3 and 44 for equipment is almost empty.
The controller C3 controls the first DC power supply unit 32 and the second DC power supply unit 33 to be operated and controls the normally-opened fifth change-over switch 8 to be closed and allows the first and second change-over switches 42 and 43 to be switched to the position of the connection point N (neutral). Accordingly, the storage batteries 3 and 44 for equipment are allowed to be disconnected, and the first DC power supply unit 32 and the second DC power supply unit 33 are allowed to be connected to each other in series, so that the charging of the storage battery 21 for driving power is performed. In this case, similarly to the third embodiment, for example, a power of voltage 300 V and current 33 A can be generated from the first DC power supply unit 32, and for example, a power of voltage 100 V and current 33 A can be generated from the second DC power supply unit 33. On the other hand, when the AC voltage of the commercial power supply 20 is equal to or lower than a predetermined value during the charging of the storage battery 21 for driving power, the controller C3 allows the normally-opened third change-over switch 6 to be closed to supply power from, for example, the second storage battery 44 for equipment for emergency illumination at a time of disaster, so that the rapid charger 41 can be used as an emergency power supply.

In addition, in the fourth embodiment, similarly to the third embodiment, (1) in each of the first and second DC power supply units 32 and 33, the ranges of voltage and current are limited, so that it is possible to manufacture the DC power supply units at a low cost. (2) Even in the case where both of the remaining amounts of the first and second storage batteries 3 and 44 for equipment are almost empty, in the aforementioned example, the two DC power supply units 32 and 33 are connected in series, so that there is an advantage in that the charging of the storage battery 21 for driving power can be performed with the DC power of voltage 400 V and current 33 A.

In addition, in the fourth embodiment, the case where the two storage batteries 3 and 44 for equipment are used is described as an example. However, the same operation can be performed by using three or more storage batteries for equipment, and much more electric vehicles can be efficiently charged.

### Fifth Embodiment

In the third and fourth embodiments, each of the rapid chargers 31 and 41 is provided with one DC power supply unit 33 for charging the storage battery 21 for driving power. In the fifth embodiment, a rapid charger is provided with a plurality of DC power supply units for charging the storage battery 21 for driving power.

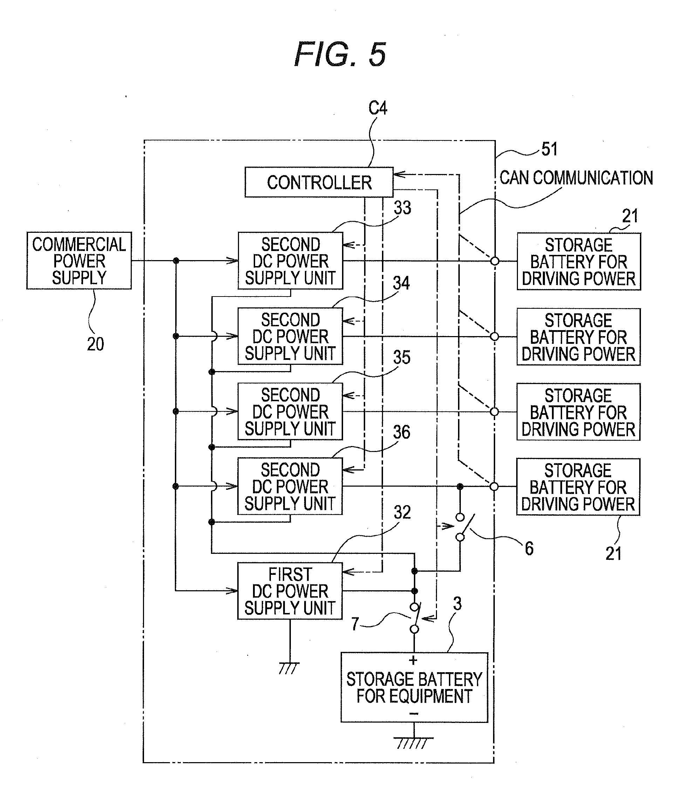

FIG. 5 is a block diagram illustrating a schematic configuration of a rapid charger according to a fifth embodiment of the invention. In addition, the same portions as those of the third embodiment are denoted by the same reference numerals.

A rapid charger 51 according to the fifth embodiment is configured to include: a first DC power supply unit 32 which is connected to a commercial power supply 20; (for example, four) second DC power supply units 33, 34, 35, and 36 each of which is connected, similarly to the first DC power supply unit 32, to the commercial power supply 20; a storage battery 3 for equipment which is connected to the first DC power supply unit 32 and each of the second DC power supply units 33, 34, 35, and 36 and which can store, similarly to the third embodiment, a DC power amount of 30 kWh; a normally-opened third change-over switch 6 of which the one terminal is connected to, for example, an output side of the second DC power supply unit 36 and of which the other terminal is connected to an output side of the first DC power supply unit 32; a normally-closed fourth change-over switch 7 of which the one terminal is connected to the output side of the first DC power supply unit 32 and of which the other terminal is connected to a positive electrode side of the storage battery 3 for equipment; and a controller C4. In addition, the control functions of the controller C4 will be described in detail when the operation of the rapid charger 51 is described.

Similarly to the third embodiment, each of the first DC power supply unit 32 and the second DC power supply units 33, 34, 35, and 36 has a capacity of a charging power of, for example, 10 kW. The first DC power supply unit 32 is used to charge the storage battery 3 for equipment, and the four units of the second DC power supply units 33, 34, 35, and 36 are used to charge (a plurality of) the storage batteries 21 for driving power of the electric vehicle. Similarly to the third embodiment, during the charging of the storage battery 3 for equipment, the first DC power supply unit 32 converts the AC power of the commercial power supply 20 into a DC power, generates a DC power of voltage 300 V and current 33 A from the output, and performs the charging. The charging of the storage battery 3 for equipment is performed by the first DC power supply unit 32 during the charging stop period of the storage battery 21 for driving power.

In addition, during the charging of the storage batteries 21 for driving power, each of the second DC power supply units 33, 34, 35, and 36 generates a shortage DC power of 10 kW (DC voltage 100 V and current 100 A) from the AC power of the commercial power supply 20 to add the shortage DC power to the DC power of 30 kW (300 V, 100 A) from the DC power stored in the storage battery 3 for equipment and supplies the DC power of 40 kW to each of the storage batteries 21 for driving power connected to the output side of the rapid charger 51. In other words, four electric vehicles can be simultaneously charged.

Next, operations of the rapid charger according to the fourth embodiment will be described with reference to FIG. 5.
First, in the case where it is determined that the charging of the storage battery 3 for equipment is needed, the controller C4 allows the first DC power supply unit 32 to be operated to perform charging the storage battery 3 for equipment with a power of, for example, voltage 300 V and current 33 A. Next, for example, in the case where it is determined by a method such as reception of CAN communication from an electronic control unit of an electric vehicle that the storage battery 21 for driving power is connected, the controller C4 stops the first DC power supply unit 32 from performing the operation to stop charging the storage battery 3 for equipment and determines from the reception of CAN communication which one of the output sides of the second DC power supply units 33 to 36 the storage battery 21 for driving power is connected to.

For example, the controller C4 controls the second DC power supply apparatus so that, in the case where the storage battery for driving powers 21 are sequentially connected to the second DC power supply unit 33 and the second DC power supply unit 34, the controller C4 allows the two second DC power supply units 33 and 34 to start the operation to acquire the AC power from the commercial power supply 20 and to supply a power of, for example, 40 kW necessary for each of the storage battery for driving powers 21. At this time, each of the second DC power supply units 33 and 34 acquires a DC power of 30 kW from the DC power stored in the first storage battery 3 for equipment, generates a shortage DC power of 10 kW (DC voltage 100 V and current 100 A) from the AC power of the commercial power supply 20 to add these powers, and supplies the DC power of 40 kW to each of the storage battery for driving powers 21.

On the other hand, when the storage batteries 21 for driving power are charged from the second DC power supply units 33 and 34, in the case where it is sensed by a method such as reception of CAN communication that the storage batteries 21 for driving power are connected to the output sides of the remaining two units of the second DC power supply units 35 and 36, similarly to the aforementioned example, the controller C4 performs control so that the second DC power supply units 35 and 36 are further operated to acquire the AC power from the commercial power supply 20 and to supply the necessary DC power to each of the connected storage batteries 21 for driving power. At this time, each of the second DC power supply units 35 and 36 acquires a DC power of 30 kW from the DC power stored in the first storage battery 3 for equipment, generates a shortage DC power of 10 kW (DC voltage 100 V and current 100 A) from the AC power of the commercial power supply 20 to add the shortage DC power to the DC power of 30 kW, and supplies the DC power of 40 kW to each of the storage batteries 21 for driving power. In addition, while each of the storage batteries 21 for driving power is charged from the four units of the second DC power supply units 33 to 36, in the case where it is sensed by a method such as reception of CAN communication that the charging of the storage battery 21 for driving power performed by, for example, the second DC power supply unit 33 is ended, the controller C4 stops the second DC power supply unit 33 from performing the operation so as to stop the charging of the storage battery 21 for driving power, allows the AC power to be acquired from the commercial power supply 20, blocks the connection to the storage battery 3 for equipment.

In addition, in the case where it is determined by the aforementioned method such as reception of CAN communication that the storage battery 21 for driving power is connected when the remaining DC power amount of the storage battery 3 for equipment is almost empty, the controller C4 allows, for example, the second DC power supply unit 33 connected to the storage battery 21 for driving power to be operated to acquire the AC power from the commercial power supply 20 and simultaneously allows the normally-closed fourth change-over switch 7 to be opened. Next, the controller C4 allows the first DC power supply unit 32 to be operated so as to connect the first and second DC power supply units 32 and 36 in series and performs charging the storage batteries 21 for driving power. In addition, the controller C4 allows the fourth change-over switch 7 to be opened so that the DC power from the first DC power supply unit 32 is not flowed in the storage battery 3 for equipment.

At this time, a DC power of voltage 300 V and current 33 A is generated from, for example, the first DC power supply unit 32, and simultaneously, a DC power of voltage 100 V and current 33 A is generated from the second DC power supply unit 33; and these power supply units are connected to each other in series, so that the DC power of voltage 400 V and current 33 A is supplied to the storage battery 21 for driving power. In the case where it is determined that the charging of the storage battery 21 for driving power is ended, the controller C4 stops the operation of the second DC power supply unit 32 to discontinue acquiring the AC power of the commercial power supply 20, so that the operation of charging the storage battery 21 for driving power is stopped. In addition, the controller C4 allows the fourth change-over switch 7 to be closed, so that the operation of charging the storage battery 3 for equipment from the first DC power supply unit 32 is performed. In addition, in the case where the AC voltage of the commercial power supply 20 is equal to or lower than a predetermined value during the stand-by of the rapid charger 1, the controller C4 allows the normally-opened third change-over switch 6 to be closed, so that the storage battery 3 for equipment is used as an emergency power supply.

In this manner, in the fifth embodiment, a plurality of the electric vehicles or the like can be simultaneously connected and charged. In this case, in terms of the equipment including the storage battery 3 for equipment, the change-over switches, and the like, since the equipment corresponding to one device is enough to use, in comparison with the case where a plurality of the devices are prepared, a total size of the device can be reduced, and thus, expenses can be reduced.
In addition, in the fifth embodiment, since the case where a plurality of the electric vehicles are to be simultaneously charged is considered, the capacity of the mounted storage battery 3 for equipment may also be increased if necessary.

In addition, in the case where the storage battery 21 for driving power as a load is connected when the remaining amount of the storage battery 3 for equipment is almost empty, the DC power of 10 kW is output from the second DC power supply unit connected to the storage battery 21 for driving power. Therefore, although the charging speed is slow, the charging of the storage battery 21 for driving power can be performed by only the DC power of the second DC power supply unit.
In addition, in the case where the AC voltage of the commercial power supply 20 is equal to or lower than a predetermined value, the third change-over switch 6 is closed, so that the DC power is output from the storage battery 3 for equipment. Therefore, power can be supplied for emergency illumination or the like by using the storage battery 3 for equipment as an emergency power supply.

In addition, although the fifth embodiment is described based on the third embodiment, a plurality of the DC power supply units 2 may be installed in each of the rapid chargers 1 and 11 according to the first and second embodiments so that a plurality of the storage batteries 21 for driving power can be simultaneously charged. For example, in FIG. 1, a plurality of the DC power supply units 2 are installed, and each of the DC power supply units 2 is connected through the first change-over switch 4 to the storage battery 3 for equipment and the output terminal of the rapid charger 1. In addition, each of the DC power supply units 2 is connected through the second change-over switch 5 to the storage battery 3 for equipment.

In addition, in the first to fifth embodiments, although the DC power supply units (first and second DC power supply units) or the change-over switches are controlled by the controller, the present invention is not limited thereto. For example, a control circuit built in the DC power supply unit may be configured to have the same control functions as those of the controller. In addition, although the capacity of the storage battery for equipment is described to be 30 kWh, the present invention is not limited thereto.

In addition, in the first to fifth embodiments, in addition to the commercial power supply 20, an auxiliary power supply (solar power generation, solar thermal power generation, wind power generation, geothermal power generation, and the like) may be provided and connected in parallel to the storage battery for equipment in the rapid charger for supplying power. Accordingly, the amount of receiving power from the commercial power supply 20 can be reduced. In this case, in the case of AC power generating equipment such as wind power generation, after the conversion into a DC power, the power is supplied to the storage battery for equipment; and in the case of DC power generating equipment such as solar power generation, after the conversion of voltage, the power is generated to the storage battery for equipment.

In addition, in the first to fifth embodiments, although the rapid chargers 1, 11, 31, 41, and 51 are described to be adapted to an electric vehicle, the present invention is not limited thereto. For example, the rapid chargers may be adapted to a robot or used as a power supply for an automatic guided vehicle. In this case, needless to say, a DC power supply unit or a storage battery for equipment appropriate to the charging characteristics of the storage battery for equipment built in the robot or the automatic guided vehicle is used. Similarly, although the capacities of the storage battery for equipment and the storage battery for driving power are described as an example, batteries having different capacities may be used. In addition, the present invention is not limited to lithium-ion batteries, but all kinds of batteries may be used.

In the first to fifth embodiments, in the charging of the storage batteries 3 and 44 for equipment and the storage battery 21 for driving power, the voltage values and the current values are described as an example. The charging of the storage batteries may not be performed with constant voltage and current. For example, similarly to the constant-voltage constant-current method or the like, a charging method according to the characteristics of the storage battery is generally needed. In terms of the control of these charging characteristics, with respect to the storage batteries 3 and 44 for equipment, the charging current, the terminal voltages, and the like of each of the storage batteries are measured by each of the controllers C1 to C4, and thus, optimal operations are configured to be automatically performed. In addition, with respect to the storage battery 21 for driving power, although the control of the charging characteristics is different according to the specification of the device such as an electric vehicle corresponding to the storage battery for driving power, in the case of the specification where the charging voltage and current value are designated from the storage battery for driving power side, the control of the charging characteristics is in accordance with the specification.

In the first to fifth embodiments, although the commercial power supply 20 is used as a power supply of the rapid charger, the present invention is not limited thereto. Any power supply unit for generating AC power such as self generation facilities may be used.

### DESCRIPTION OF REFERENCE SIGNS

- 1, 11, 31, 41, 51: rapid charger,
- 2: DC power supply unit,
- 3: storage battery for equipment (First storage battery for equipment),
- 4, 42: First change-over switch,
- 5, 43: Second change-over switch,
- 6: Third change-over switch,
- 7: Fourth change-over switch,
- 8: Fifth change-over switch,
- 20: Commercial power supply,
- 21: Storage battery for driving power of electric vehicle
- 32: First DC power supply unit,
- 33,34,35,36: Second DC power supply unit,
- 44: Second storage battery for equipment

## Claims

1. A rapid charger comprising:
a storage battery for equipment;
a DC power supply unit which converts an AC power of an AC power supply into a DC power; and
a controller which controls the DC power supply unit such that the DC power supply unit generates a DC power necessary for charging the storage battery for equipment from the AC power of the AC power supply and allows the DC power to be supplied from the DC power supply unit to the storage battery for equipment during the charging of the storage battery for equipment,
wherein, when a storage battery for driving power as a load is connected, the controller allows the DC power supply unit and the storage battery for equipment to forma series circuit, controls the DC power supply unit such that the DC power supply unit generates a predetermined DC power from the AC power of the AC power supply, adds the predetermined DC power to the DC power of the storage battery for equipment to generate a DC power necessary for charging the storage battery for driving power, and allows the DC power to be supplied to the storage battery for driving power.

2. A rapid charger comprising:
a storage battery for equipment;
a DC power supply unit which converts an AC power of an AC power supply into a DC power; and
a controller which controls the DC power supply unit such that the DC power supply unit generates a DC power necessary for charging the storage battery for equipment from the AC power of the AC power supply and allows the DC power to be supplied from the DC power supply unit to the storage battery for equipment during the charging of the storage battery for equipment,
wherein, when a storage battery for driving power as a load is connected, the controller allows the DC power supply unit and the storage battery for equipment to forma series circuit, controls the DC power supply unit such that the DC power supply unit generates a predetermined DC power from the AC power of the AC power supply, adds the DC power of the storage battery for equipment to the predetermined DC power to generate a DC power necessary for charging the storage battery for driving power, and allows the DC power to be supplied to the storage battery for driving power.

3. The rapid charger according to claim 1 or 2, wherein, when it is not sensed that the storage battery for driving power is connected, the controller controls the DC power supply unit such that the DC power is supplied to the storage battery for equipment.

4. The rapid charger according to any one of claims 1 to 3,
wherein a plurality of the DC power supply units are installed, and
wherein, when it is sensed that the storage battery for driving power is connected, the controller controls the DC power supply unit connected to the storage battery for driving power to be connected to the AC power supply and the storage battery for equipment so as to generate a predetermined DC power from the DC power supply unit and allows the predetermined DC power to be added to the DC power of the storage battery for equipment.

5. The rapid charger according to any one of claims 1 to 4, wherein, in the case where it is sensed that the storage battery for driving power is connected when the remaining amount of the storage battery for equipment is almost empty, the controller controls the DC power supply unit such that the DC power supply unit generates a predetermined DC power from the AC power of the AC power supply and allows the predetermined DC power to be supplied from the DC power supply unit to the storage battery for driving power.

6. The rapid charger according to any one of claims 1 to 5, further comprising a normally-opened switch which is installed between a positive electrode side of the storage battery for equipment and an output side of the DC power supply unit,
wherein, when the AC voltage of the AC power supply is equal to or lower than a predetermined value, the controller allows the switch to be closed so as to use the storage battery for equipment as an emergency power supply.

7. A rapid charger comprising:
a storage battery for equipment;
first and second DC power supply units, each of which converts an AC power of an AC power supply into a DC power; and
a controller which controls the first DC power supply unit such that the first DC power supply unit generates a DC power necessary for charging the storage battery for equipment from the AC power of the AC power supply and allows the DC power to be supplied from the first DC power supply unit to the storage battery for equipment during the charging of the storage battery for equipment,
wherein, when the storage battery for driving power as a load is connected, the controller controls the second DC power supply unit such that the second DC power supply unit generates a predetermined DC power from the AC power of the AC power supply, adds the predetermined DC power to the DC power of the storage battery for equipment to generate a DC power necessary for charging the storage battery for driving power, and allows the DC power to be supplied from the second DC power supply unit to the storage battery for driving power.

8. The rapid charger according to claim 7, wherein, when it is not sensed that the storage battery for driving power is connected, the controller controls the first DC power supply unit such that the DC power is supplied to the storage battery for equipment.

9. The rapid charger according to claim 7 or 8,
wherein a plurality of the second DC power supply units are installed, and
wherein, when it is sensed that the storage battery for driving power is connected, the controller controls the second DC power supply unit connected to the storage battery for driving power to be connected to the AC power supply and the storage battery for equipment such that the second DC power supply unit generates a predetermined DC power from the second DC power supply unit and allows the predetermined DC power to be added to the DC power of the storage battery for equipment.

10. The rapid charger according to any one of claims 7 to 9, wherein, in the case where it is sensed that the storage battery for driving power is connected when the remaining amount of the storage battery for equipment is almost empty, the controller controls the second DC power supply unit such that the second DC power supply unit generates a predetermined DC power from the AC power of the AC power supply and allows the predetermined DC power to be supplied from the second DC power supply unit to the storage battery for driving power.

11. The rapid charger according to claim 10, wherein, in the case where it is sensed that the storage battery for driving power is connected when the remaining amount of the storage battery for equipment is almost empty, the controller controls the first DC power supply unit such that the first DC power supply unit generates a predetermined DC power from the AC power of the AC power supply and allows the predetermined DC power to be supplied from the first DC power supply unit to the storage battery for driving power.

12. The rapid charger according to any one of claims 7 to 11, further comprising a normally-opened switch which is installed between a positive electrode side of the storage battery for equipment and an output side of the second DC power supply unit,
wherein, when the AC voltage of the AC power supply is equal to or lower than a predetermined value, the controller allows the switch to be closed so as to use the storage battery for equipment as an emergency power supply.

13. The rapid charger according to any one of claims 1 to 12, wherein an auxiliary power supply is connected in parallel to the storage battery for equipment.
